# EUROPÄISCHE PATENTSCHRIFT

(11) **EP 0 590 099 B1**
(45) Veröffentlichungstag und Bekanntmachung des Hinweises auf die Patenterteilung: **13.12.1995**
(21) Anmeldenummer: 93900008.9
(22) Anmeldetag: 29.05.1992
(51) Int. Cl.: B01F 7/16

(54) **VERFAHREN ZUM TRANSPORT UND ZUR AUFBEREITUNG VON UND ZUR BESCHICKUNG EINER GIESSANLAGE MIT GIESSHARZ, SOWIE VORRICHTUNG ZUR AUSFÜHRUNG DES VERFAHRENS**
PROCESS FOR THE TRANSPORT AND PREPARATION OF CAST RESIN AND THE SUPPLY OF A CASTING INSTALLATION THEREWITH AND DEVICE FOR IMPLEMENTING THE PROCESS
PROCEDE ET DISPOSITIF DE PREPARATION DE RESINE A COULER, DE TRANSPORT DE RESINE A COULER ET D'ALIMENTATION D'UNE INSTALLATION DE COULEE EN RESINE A COULER

(30) Priorität: 13.06.1991 DE 4119415
(43) Veröffentlichungstag der Anmeldung: 06.04.1994
(73) Patentinhaber: VERFAHRENSTECHNIK HÜBERS GMBH, D-46395 Bocholt (DE)
(72) Erfinder: TERHARDT, Josef, D-4292 Rhede (DE)
(74) Vertreter: Stratmann, Ernst, Dr.-Ing.
(86) Internationale Anmeldenummer: EP9201202
(87) Internationale Veröffentlichungsnummer: WO9222377

(56) Entgegenhaltungen:
- DE-A- 3 728 952
- DE-A- 3 803 418
- GB-A- 210 702
- GB-A- 2 198 685
- US-A- 3 178 058

## Beschreibung

Die Erfindung betrifft ein Verfahren zur Aufbereitung, insbesondere Entgasung, Entfeuchtung und Homogenisierung von Gießharz in einer Gießanlage, welches Gießharz aus mehreren Komponenten, wie Harz und Härter mit sedimentierenden Füllstoffen, besteht, wobei die Gießanlage mehrere, ein Rührwerk enthaltende, mit abnehmbarem Deckel versehene oder eine Zufuhröffnung aufweisende, vorzugsweise evakuierbare Vorratsbehälter für Gießharz oder die Gießharzkomponenten, dem Vorratsbehälter zugeordnete, an seinem unteren Austrittsende angeordnete Dosierpumpen, deren Dosierkolben ein Ventil bilden, und Antriebseinrichtungen für die Dosierkolben der Dosierpumpen sowie Antriebseinrichtungen für das Rührwerk aufweist, welche Antriebseinrichtungen an einer Station (einer Verarbeitungsstation, zweiten Station) mit dem Rührwerk verbunden sind.

Ein Verfahren zum Antrieb einer Gießanlage und ein Gerät zur Ausführung des Verfahrens ist aus der DE 38 03 418 A1 der Anmelderin bereits bekannt. Bei dem bekannten Verfahren werden in zwei Vorratsbehältern befindliche Gießharzkomponenten (Harz und Härter mit sedimentierenden Füllstoffen) mit einem Rührwerk aufbereitet, wobei die beiden Vorratsbehälter mit abnehmbarem Deckel versehen und evakuierbar sind. Desweiteren sind dem Vorratsbehälter zugeordnete, an ihrem unteren Austrittsende angeordnete Dosierpumpen vorgesehen, deren Dosierkolben ein Ventil bilden, desweiteren Antriebseinrichtungen für die Dosierkolben der Dosierpumpen sowie Antriebseinrichtungen für das Rührwerk. Die Dosiereinrichtungen dienen zur Abgabe einer vorbestimmten Volumenmenge des Gießharzes oder der Gießharzkomponente an eine Weitervarbeitungseinrichtung_{,} wie Mischer oder Gießeinrichtung.

Das bekannte Verfahren sowie das zur Ausführung dieses bekannten Verfahrens benutzte Gerät arbeiten an sich zufriedenstellend, haben aber hinsichtlich der immer stärker in den Vordergrund tretenden Umweltprobleme noch Nachteile.

Diese liegen insbesondere darin, daß die Harzsysteme, die zum Vergießen von beispielsweise elektronischen Bauteilen verwendet werden, häufig aromatische Lösungsmittel enthalten, die für das Bedienungspersonal, insbesondere aber auch für die allgemeine Umwelt eine potentielle Belastung oder Gefahr darstellen. Ein weiteres Problem ist die Tatsache, daß die Anlieferung der Harze oder der Harzkomponenten in Gebinden erfolgen, die nicht nur in der Bereitstellung, sondern auch in der anschließenden Beseitigung Probleme verursachen, weil immer Harzreste in diesen Gebinden zurückbleiben, die bei der späteren Beseitigung der Gebinde (sei es durch eine Müllverbrennungseinrichtung, sei es durch Mülldeponie) eine potentielle Umweltgefahr darstellen.

Beides bedingt zudem erhebliche Kosten, sei es für die Beschaffung von jeweils neuen Gebindebehältern, sei es auch für deren spätere Entsorgung. Außerdem müssen beim Verarbeiten der Harze mit der bisherigen Einrichtung und gemäß dem bisherigen Verfahren erhebliche arbeitsaufwendige und kostenträchtige Vorsichtsmaßnahmen getroffen werden, damit möglichst wenig schädliche Stoffe aus dem Verfahrenskreislauf herausgelangen, die das Bedienungspersonal und die Umwelt schädigen oder belasten.

Insbesondere beim Aufrühren der sedimentierende Füllstoffe enthaltenden Harze entstehen schädliche Dämpfe.

Aus der DE 37 28 952 A1 ist ein Rührgerät für Dentalmassen bekannt, bestehend aus einem Rührbecher und einen in diesem drehbaren Rührer, mit einem am Gehäuse angeordneten Rührantrieb, mit dessen Kupplungsstück ein an dem Rührer angebrachtes Gegenstück bei am Gehäuse gehaltener Rühreinheit in Eingriff steht.

Aus der US-A-3 178 058 ist eine Einrichtung zur Ausgabe von Farbe bekannt, bestehend aus einem drehbaren Halter, an dem in einem Kreis mehrere Farbenaufnahmebehälter einbringbar sind, wobei zu jedem Behälter ein Kolben gehört, der anhand einer Skala eine bestimmte Menge von Farbe über ein am Boden des Behälters angeordnetes Ventil ausgeben kann. In den Behältern sind noch Rühreinrichtungen vorgesehen.

In der GB-A-2 198 685 wird ein Verfahren zur Zwischenlagerung von Kunststoffmaterial, das verarbeitet werden soll, beschrieben. Gemäß diesem Verfahren wird ein zum Spritzgießen vorgesehenes Material in einen Materialbehälter außerhalb des Maschinengebietes eingeschüttet, nach dem Schließen des Materialbehälters wird dann die Luft innerhalb des Material evakuiert und so die Lagerfähigkeiten und die Transportmöglichkeiten des Materials verbessert.

Die GB-A-210 702 beschäftigt sich schließlich mit einer Mischeinrichtung für Farben, bei der die Farbe in einem Behälter gemischt wird, der dann anschließend mit dieser Farbe von der Mischeinrichtung entfernt und durch einen neuen Behälter ersetzt wird. Der Mischvorgang erfolgt durch eine Kupplung, die am oberen Ende des Behälters angeordnet ist.

Aufgabe der Erfindung ist es, die aus der DE 38 03 418 A1 bekannte Verfahrensweise und die aus dieser Druckschrift bekannte Vorrichtung dahingehend weiterzuentwickeln, daß die in diesem Zusammenhang geschilderten Probleme nicht oder nicht mehr in dem gleichen Maße auftreten. Gelöst wird die Aufgabe dadurch, daß an einer Station (ersten Station, Füll-Station) der Vorratsbehälter, einschließlich geschlossenem Ventil, bei abgenommem Deckel oder über die Zufuhröffnung mit Gießharz oder Gießharzkomponenten gefüllt, dann bei qeschlossenem Deckel bzw. geschlossener Zufuhröffnung der Behälter (ggf. nach Herstellung und/oder Aufrechterhaltung eines Vakuums), wahlweise nach längerem Transport und/oder längerer Lagerung, an einer Station (zweiten Station, Verarbeitungsstation) mit den Antriebseinrichtungen verbunden und das Gießharz oder die Gießharzkomponenten verarbeitet werden.

Auf diese Weise entfällt die Notwendigkeit, die für das Verfahren benötigten Gießharze oder Gießharzkomponenten in besonderen, zu beschaffenden und dann später zu entsorgenden Gebinden von einer (ersten) Station zu einer anderen (zweiten) Station zu transportieren und/oder ggf. auch zwischenzulagern. Insbesondere entfallen somit Handhabungskosten für Beschaffung und Entsorgung dieser Gebinde, außerdem muß nicht eine Umfüllung von dem Gebinde in den Vorratsbehälter stattfinden, was mit Handhabungsproblemen verbunden ist, insbesondere in den Fällen, wo dabei schädliche Gase austreten können, die z. B. in umständlicher Weise abgesaugt werden müßten, was insbesondere bisher beim notwendigen Aufrühren von sedimentierende Füllstoffe enthaltenden Harzbestandteilen der Fall war.

Das im Vorratsbehälter vorhandene Rührwerk macht es möglich, gemäß einer Weiterbildung des Verfahrens an der zweiten Station oder Verarbeitungsstation das Rührwerk mit Antriebseinrichtungen zu verbinden. Entsprechendes gilt, wenn der Vorratsbehälter einen Anschluß für eine Vakuumpumpe aufweist, in welchem Falle es günstig ist, gemäß einer anderen Weiterbildung des Verfahrens in der zweiten Station diesen Anschluß mit einer Vakuumpumpe zu verbinden.

Der Vorratsbehälter kann auch, wie beim Stand der Technik, eine Heizeinrichtung aufweisen. Falls dies der Fall ist, kann gemäß einer noch anderen Weiterbildung des Verfahrens günstigerweise an der zweiten Station die Heizeinrichtung mit einer Heizenergiequelle verbunden werden.

Gemäß einer noch anderen Weiterbildung des Verfahrens kann an der zweiten Station dem Vorratsbehälter ein weiterer, vorzugsweise kleinerer Vorratsbehälter (oder auch deren mehrere) nachgeschaltet werden, der eine weitere Verarbeitung vornimmt, beispielsweise mittels einer in ihm vorhandenen Dosierpumpe eine Dosierung übernimmt. Alternativ oder zusätzlich kann auch hier eine Vermischung mit anderen Komponenten vorgenommen werden, wie auch eine Aufbereitung oder sonstige Verarbeitungsschritte ausgeführt werden.

Zwischen den beiden Vorratsbehältern kann ein Umpumpen des Vorrates stattfinden, beispielsweise über Versorgungs- oder Ringleitungen. Durch das Umpumpen verringert sich die Gefahr, daß sich bei beispielsweise mit Feststoffen beladenen Harzen oder Harzkomponenten diese Feststoffe in den Versorgungs- oder Ringleitungen ablagern, was eintreten könnte, wenn das Umpumpen nicht stattfindet, weil in den Zeiträumen, wo ein Material nicht abgefordert wird, die in den Rohrleitungen vorhandene Harzflüssigkeit oder Harzkomponentenflüssigkeit zum Stehen kommt und dadurch Ablagerungserscheinungen möglicherweise auftreten können.

Der Unterdruck (bzw. das Vakuum), Temperatur, Mischungen und ggf. noch andere Parameter werden gemäß einer noch anderen Ausführungsform des Verfahrens über Regeleinrichtungen gesteuert. Zur Verhinderung von Ablagerungen in dem Vorratsbehälter kann ein in ihm vorhandenes Rührwerk entweder dauernd in Betrieb sein, oder aber zeitgesteuert in Betrieb gesetzt werden, falls die Ablagerungsgeschwindigkeit relativ klein sein sollte.

Falls vor dem Vergießen von bestimmen elektronischen Bauteilen eine bestimmte Aufbereitungszeit erforderlich oder vorgeschrieben ist, ist es gemäß einer noch anderen Weiterbildung des Verfahrens günstig, wenn die Freigabe der Versorgung mit dem Gießharz an der Gießharzstation erst nach einer vorbestimmten Aufbereitungszeit und/oder nach Erreichen bestimmter Parameter des Vorratsmaterials (z. B. Viskosität, Temperatur, Unterdruck, Gasgehalt) erfolgt.

Das erfindungsgemäße Verfahren stellt somit ein Transport- und Aufbereitungs- und Versorgungsverfahren für Harze bzw. Harzkomponenten dar, bei dem mit Mehrwegcontainern gearbeitet wird, die nicht nur Handhabungsvorteile haben und die Abgabe von schädlichen Stoffen verhindern oder eingrenzen, sondern die auch die mehr und mehr vom Gesetzgeber unterbundene Benutzung von Einweggebinden vermeidet. Durch das verfahrensgemäß verwendete Mehrwegcontainersystem wird sowohl der Transport von insbesondere gefüllten, zu Sedimentation neigenden wie auch abrasiven Harzsystemen erleichtert, außerdem wird auch der Handhabungsaufwand für das Abfüllen des Harzes beispielsweise in vakuumfesten Einweggebinden und den damit verbundenen Material- und Arbeitskosten vermiedon. Die vakuumfesten Mehrwegbehälter verhindern auch zeitweise Luftzufuhr, wie sie bisher immer auftrat, was eine erhebliche Verkürzung der Aufbereitungszeit ermöglicht. Ebenso wird beim Endverbraucher die Notwendigkeit der Entsorgung der entleerten Behälter erspart.

Desweiteren gelingt es, mit den erfindungsgemäß angewendeten Mehrwegcontainern bestimmte bisher notwendige Einrichtungen einzusparen, wie Aufwärm- und Homogenisierungseinrichtungen, Auffangbehälter sowie entsprechende Maßnahmen zur Gebindeentsorgung.

Dadurch werden auch bisher notwendige Einrichtungen für die Arbeitshygiene verringert oder beiseitigt.

Die eingangs erwähnte Vorrichtung, mit der das erfindungsgemäße Verfahren ausgeführt werden kann, besteht aus
1.) einem vorzugsweise evakuierbaren Vorratsbehälter mit abnehmbarem Deckel oder Zugangöffnung für Gießharz oder Gießharzkomponente und mit zugeordneter Dosierpumpe und Rührwerk;
2.) zwei Stationen, einer ersten Station (Füll-Station), an der der Vorratsbehälter gefüllt wird, und einer zweiten Station (Verarbeitungsstation), an der der Vorratsbehälter mit Antriebseinrichtungen verbindbar ist;
3.) je einem Aufnahmegestell an jeder Station, welches Gestell mit dem Vorratsbehälter verkuppelbare Antriebsvorrichtungen für die Dosierpumpe und für das Rührwerk aufweist.

Das Aufnahmegestell kann insbesondere eine Schnellkupplungseinrichtung zur Verbindung eines mechanischen Antriebs mit einem innerhalb des Vorratsbehälters angeordnetem Rührwerk, oder auch zur Verbindung einer Vakuumquelle und/oder eines mechanischen Antriebs mit einer innerhalb des Vorratsbehälters angeordneten Vakuum- und/oder Entgasungseinrichtung aufweisen. Das Aufnahmegestell kann aber auch Schnellkupplungseinrichtungen zur Verbindung einer Energiequelle für Wärme oder auch für Kälte mit einer am oder innerhalb des Vorratsbehälters angeordneten Temperiereinrichtung für das Harz und die Harzkomponente vorgesehen sein. Zu diesem Zweck kann temperiertes Wasser, temperiertes Öl oder auch eine elektrische Heizeinrichtung verwendet werden.

Das Aufnahmegestell kann aber auch eine Schnellkupplungseinrichtung zur Verbindung von Regel- und Steuereinrichtungen für mechanische, elektrische, Vakuum- oder Wärme/Kälteenergie mit am oder innerhalb des Vorratsbehälters angeordneten Sensoren für Temperatur, Druck, Viskosität, örtliche Lage von Bauteilen u. dgl. vorgesehen sein.

Von besonderem Vorteil ist, daß mehrere, voneinander unabhängige Verarbeitungsstationen vorgesehen sein können, die beispielsweise mittels nur einem Vorratsbehälter versorgt werden.

Gemäß einer noch anderen Weiterbildung der erfindungsgemäßen Vorrichtung ist ein Aufnahmegestell für den Vorratsbehälter einer Füll- und/oder Aufbereitungsstation vorgesehen, mit an den Vorratsbehälter ankuppelbaren Einrichtungen zum Füllen und/oder Aufbereiten des Harzes oder der Harzkomponente.

Das Aufnahmegestell kann eine Hubeinrichtung für das Anheben eines Deckels des Vorratsbehälters umfassen. Der Deckel wiederum kann die Antriebsvorrichtung für das Rührwerk oder die Förderpumpe tragen.

Der Vorratsbehälter besteht vorzugsweise aus einem kesselartigen Druckbehälter mit zylindrischem Querschnitt, der von einem, vorzugsweise im Querschnitt quadratischen Transport- und Stapelrahmen umgeben ist.

Alternativ kann zur Stapelung auch ein Zwischenrahmen vorgesehen sein.

Der Rahmen kann so ausgeführt werden, daß er mittels eines Gabelstaplers erfaßbar ist, was besonders bei großen, von Hand nicht mehr tragfähigen Vorratsbehältern von Vorteil ist.

Insbesondere ist der Vorratsbehälter vorzugsweise ein Mehrweggebinde aus Metall, wie Stahl, vorzugsweise mit Innenbeschichtung aus rostfreiem Metall oder aus Kunststoff.

Ein derartiger Vorratsbehälter ist günstigerweise mit einem an die Bodenform des Behälters angepaßten Schaufelrührwerk versehen.

Um den Inhalt des Vorratsbehälters besonders einfach temperieren zu können, ist es günstig, wenn der Behälter einen Doppelmantel zur Beheizung bzw. zur Kühlung aufweist.

Dieser Doppelmantel kann mit Wärmeträgeröl oder Wasser als Heizmedien oder auch elektrisch mittels um den Behälter herum geführten Heizmatten versorgt werden.

Es ist auch günstig, wenn der Behälter eine thermische Isolierung aufweist, die mit einer Schutzverkleidung aus z. B. Stahlblech versehen ist.

Am Behälterauslauf (am Behälterboden) befindet sich günstigerweise ein Behälterauslauf mit Ankuppeleinrichtung zum Ankuppeln einer Verarbeitungseinrichtung, sowie eine flüssigkeits- oder auch gasfeste Schutzkappe als Transportschutz und als Auslaufsicherung. Mit dieser Schutzkappe wird beispielsweise verhindert, daß der Behälterauslauf beim Transport beschädigt wird, beispielsweise dann, wenn er ein Außengewinde zum Ankuppeln von Anschlußleitungen aufweist. Außerdem erreicht man mit einer derartigen Schutzkappe eine zusätzliche Sicherung gegen Auslaufen des Behälterinhalts, wenn der Behälter selbst bereits eine ventilartige Verschlußeinrichtung aufweist, die normalerweise das Auslaufen des Behälterinhalts verhindern soll.

### KURZE BESCHREIBUNG DER ERFINDUNG

Die Erfindung wird nachfolgend anhand von Ausführungsbeispielen näher erläutert, die in den Zeichnungen dargestellt sind.

Es zeigt:
- Fig. 1: eine Misch- und Vergießanlage, die mit dem erfindungsgemäßen Verfahren in ihrer Arbeitsweise verbessert werden kann;
- Fig. 2: eine schematische Darstellung der erfindungsgemäßen Verfahrensweise;
- Fig. 3: in einer axialen Schnittansicht eine praktische Ausführungsform eines erfindungsgemäß ausgebildeten Mehrwegcontainers in einer Station, in der Harz ausgegeben wird;
- Fig. 4: in einer etwas schematisierten Darstellung eine Seitenansicht der Anordnung gemäß Fig. 3;
- Fig. 5: eine um 90° gedrehte Seitenansicht;
- Fig. 6: eine Ansicht von oben auf die Anordnung gemäß Fig. 3; und
- Fig. 7: eine Detaildarstellung des Behälteraustritts in Achsialschnittansicht.

### BESTE WEGE DER AUSFÜHRUNG DER ERFINDUNG

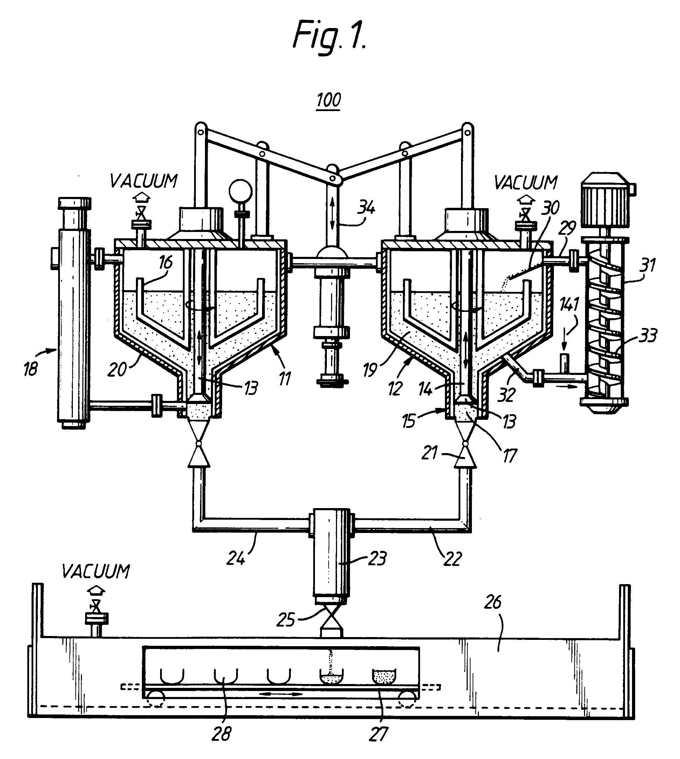

In Fig. 1 ist eine Gießanlage 100 zur Verarbeitung von Gießharz schematisch dargestellt, bestehend aus den in vorliegendem Fall entsprechend den zwei benötigten Harzbestandteilen aus zwei Vorratsbehältern 11 , 12 für die zwei unterschiedlichen Gießharzkomponenten, wie beispielsweise einem, ggf. mit Feststoffpartikeln, wie Quarzpartikeln gefülltem Polyesterharz einerseits und einem Härter andererseits. Die beiden Vorratsbehälter 11, 12 sind im allgemeinen so bemessen, daß das Nutzvolumen zumindest einen Tagesverbrauch abdeckt. Die Vorratsbehälter werden mittels einer nicht dargestellten Vakuumpumpe evakuiert und mittels eines Rührwerks 16 lassen sich die Gießharzbestandteile durch Rühren und (ggf. unter Wärme) entgasen, entfeuchten und homogenisieren, wobei zur Erwärmung eine Umlaufheizeinrichtung 18, alternativ auch elektrische Mantelbeheizungseinrichtungen vorgesehen sein können, die zusammen mit einer Wärmeisolierung 20 für eine gleichmäßige Temperatur des im Vorratsbehälter befindlichen Vorrats an Harzkomponente sorgt.

Die Vorratsbehälter gemäß Fig. 1 weisen jeweils auch eine Dosierpumpe 15 auf, bestehend aus einer in einem vom Rührwerk 16 gebildeten Rohr geführten Kolbenstange 14, an deren unterem Ende sich ein Kolben 13 befindet, der das untere Austrittsende 17 des Vorratsbehälters 11 bzw. 12 in der nach unten geschobenen Stellung verschließt, in einer angehobenen Stellung, bei der er aus diesem Zylinderbereich herausgetreten ist, jedoch das Nachfließen von Gießharzkomponente 19 in diesen Raum ermöglicht, so daß beim anschließenden Abwärtsschieben der Kolbenstange 14 mit dem Kolben 13 die Gießharzkomponente aus dem Vorratsbehälter 12 herausgedrückt werden kann, von wo es beispielsweise über ein Ventil 21 über ein Leitungsstück 22 in einen Statikmischer 23 einmünden könnte, der außerdem von einem anderen, ähnlich gebauten Vorratsbehälter 11 über eine Leitung 24 eine weitere Komponente erhalten könnte, die er dann mischt und über ein Gemischabgabeventil 25 in eine beispielsweise unter Vakuum stehende Gießkammer 26 abgeben kann, um dort auf einer Palette 27 verschieblich angeordnete Gießformen 28 zu füllen.

Die Anlage 100 stellt eine Verarbeitungsstation für Gießharz oder ähnliches dar, die beispielsweise durch Abheben des Deckels des Vorratsbehälters 11 mit einer Harzkomponente und des Deckels des Vorratsbehälters 12 mit einer Härterkomponente beschickt werden kann. Anstatt jeweils einen abnehmbaren Deckel vorzusehen, kann z. B. in dem Vorratsbehälter 12 auch eine Zugangsöffnung 29 vorgesehen sein, durch die eine Harzkomponente in den Vorratsbehälter 12 von außen eingeführt werden kann.

Zur Entgasung der Gießharzkomponente können Ablaufbleche 30 vorgesehen werden, über die die viskose Harzkomponente entlangfließt, dabei eine dünne Schicht bildet und dadurch ggf. vorhandene Gaseinschlüsse an die Oberfläche und zum Platzen bringt.

Diese Entgasungseinrichtung kann eine Umlaufschneckenfördereinrichtung 31 umfassen, die am unteren Ende (32) des Vorratsbehälters 12 die Harzkomponente aufnimmt und durch Antrieb einer entsprechend geformten Schnecke 33 bis zu der Eintrittsöffnung (29) und dann zum Ablaufblech 30 transportiert.

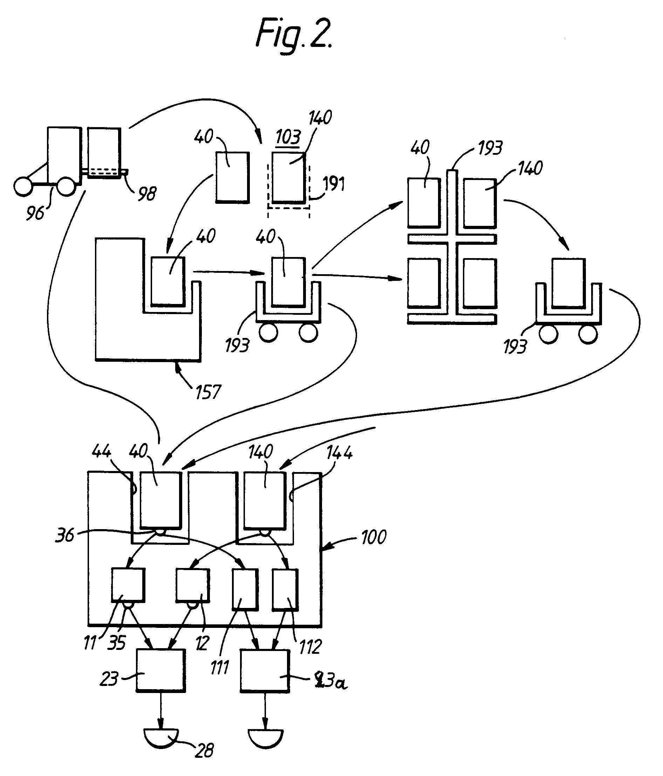

In Fig. 2 ist diese Anordnung schematisiert nochmals dargestellt, wobei in der Gießanlage 100 außer den bereits erwähnten Vorratsbehälter 11, 12, die zu einem Statikmischer 23 Material führen, von dem aus es dann über die erwähnten Ventileinrichtungen in eine Gießform 28 gelangt, noch weitere ähnliche Anordnungen vorgesehen sind, beispielsweise Vorratsbehälter 111, 112 und einen Mischer 23a.

Nach einer bestimmten Anzahl von Hüben, die beispielsweise gemäß Fig. 1 eine zentrale Kolbenantriebseinrichtung 34 ausführt, ist der Vorrat an Harzkomponente bzw. Härter in dem einen oder auch in beiden Vorratsbehältern 11, 12 erschöpft. Man kann diese Anzahl von Hüben abtasten und entsprechend eine Leermeldung oder Aktivierungsmeldung auslösen, die Veranlassung gibt, in den Vorratsbehälter 11, 12 entsprechend Material nachzufüllen. Die Leermeldung kann auch aufgrund einer Füllstandssonde erfolgen, die beispielsweise aufgrund des statischen Flüssigkeitsdruckes die noch verbliebene Harzmenge ermittelt.

Um eine möglichst hohe Ausnutzung der Anlage zu erreichen, wird bei einer 8-stündigen Schichtdauer beispielsweise gemäß bisherigem Verfahren über zwei Schichten (je 8 Stunden, insgesamt 16 Stunden) ein Vergießbetrieb vorgenommen, wobei der Inhalt der Vorratsbehälter 11 bzw. 12 für diese Arbeitsdauer möglicherweise gerade ausreicht. In der dritten Schicht wird dann (z. B. nach Öffnen der Deckel der Behälter 11, 12 und ggf. Reinigen des Behälters) aus einem Einweggebinde neues Gießharzkomponentenmaterial in die Behälter 11, 12 eingefüllt, woraufhin während der verbleibenden Zeit dieser dritten Schicht das Material herkömmlicherweise innerhalb des Behälters 11 bzw. 12 aufbereitet wird, beispielsweise durch Erwärmen auf eine bestimmte Temperatur (beispielsweise mittels der Umlaufheizeinrichtung 18), wobei es durch Bewegen des Rührwerks 16 gründlich gemischt wird, so daß z. B. Harzkomponente und Füllstoff gleichmäßig ineinander verteilt werden, wobei zusätzlich durch Ablaufblechbehandlung eine Entgasung stattfinden könnte, siehe die Anordnung der Bezugszahlen 30, 31, 33 in Fig. 1. Es wird unter Vakuum gearbeitet, so daß neben der Entgasung auch eine Entfeuchtung stattfindet.

Diese Arbeitsweise bedingt naturgemäß jeweils eine Unterbrechung eines an sich gewünschten fortlaufenden Betriebes, außerdem ist beim Öffnen und Nachfüllen des Materials in die Vorratsbehälter 11, 12 nicht immer auszuschließen, daß Dämpfe hochsteigen und die Bedienungsperson gefährden und die Umwelt verschmutzen, gleiches gilt für die Gefahr des Berührens des Materials durch die Bedienungsperson, desweiteren ist das Eindringen von Schmutz in den zumindest teilweise offenen Behälter nicht völlig auszuschließen.

Außerdem müssen die Gebinde, die in die Vorratsbehälter 11, 12 in dieser dritten Schicht entleert werden, als Sondermüll entsorgt werden. Bei hohem Verbrauch, beispielsweise 1 t Härter pro Tag, kann es zu erheblichen Mengen derartiger leerer Gebinde kommen.

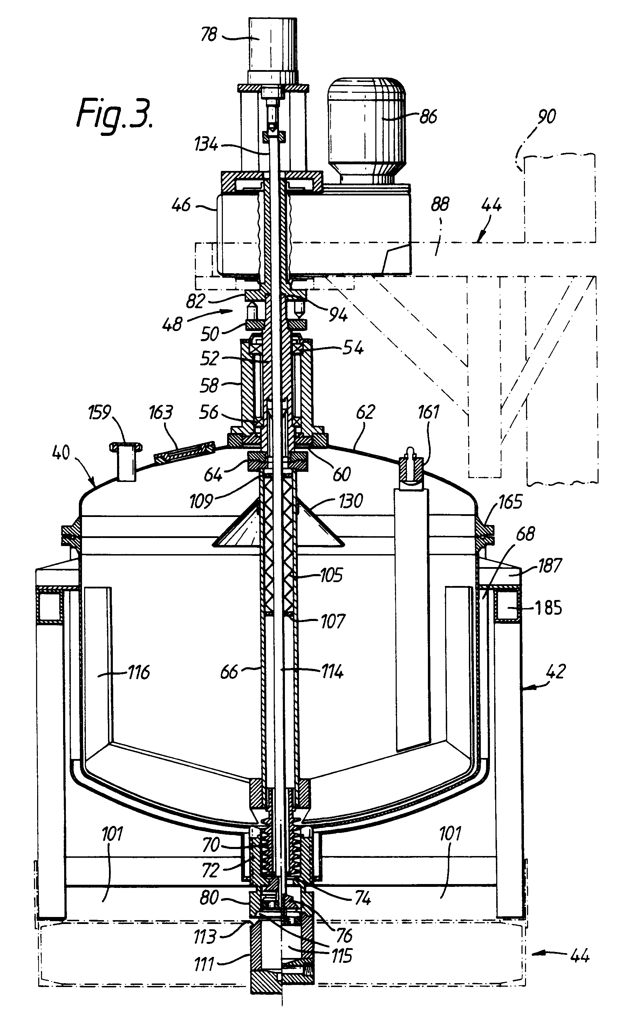

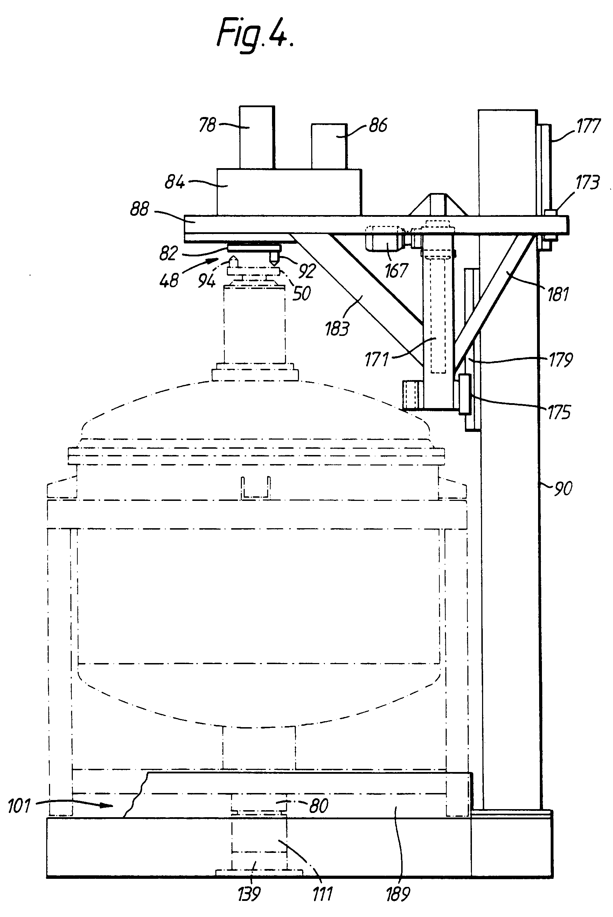

Wie anhand der Fig. 2 jetzt näher erläutert werden soll, lassen sich diese Nachteile dadurch vermeiden, daß anstelle der Einwegbehälter für die verschiedenen Harzbestandteile Mehrwegbehälter oder Wechselcontainer 40, 140 Verwendung finden, die im Prinzip ähnliche Funktionen haben können, wie die in Fig. 1 dargestellten Vorratsbehälter 11, 12, wobei jedoch an der Verarbeitungsstation, verkörpert beispielsweise durch die Gießanlage 100, eine Aufnahme 44 oder 144 für den Vorratsbehälter 40 vorgesehen ist, welche Aufnahme 44 oder 144 mit dem Vorratsbehälter 40 verkuppelbare Antriebseinrichtung 46 für die Harz- oder Harzkomponentenverarbeitung aufweist. Diese in dem Aufnahmegestell angeordnete Antriebseinrichtung kann eine Schnellkuppeleinrichtung sein, wie sie z. B. in Fig. 3 oder 4 dargestellt ist. Wie zu erkennen, besteht sie aus einer ersten Kupplungsscheibe 50, die mit einer hohlen Antriebswelle 52 drehstarr verbunden ist, die mittels Kugellager 54, 56 in einem Lageraufsatz 58 drehbar gehalten ist.

Die Welle 52 reicht durch eine Öffnung 60 im Deckel 62 des Mehrwegbehälters 40 in diesen Behälter hinein und steht dort über eine Ringflanschverbindung 64 mit einem hohlen Rohr 66 in Verbindung, das an seinem oberen Ende Entgasungsablaufbleche 130 trägt, an seinem unteren Ende Rührwerkflügel 116, die mit ihrer Außenkontur an die Innenkontur der inneren Behälterwand 68 des Behälters 40 angepaßt ist, so daß nur ein geringer Abstand zwischen diesen beiden Flächen verbleibt. Dadurch wird erreicht, daß praktisch kein Festmaterial sich bei Betätigung des Rührflügels in diesem Bereich absetzen kann. Während des Transports sedimentierter Füllstoff wird wieder aufgerührt, ungewünschte Änderungen im Mischungsverhältnis von z. B. Harz und Füllstoff (beim Vergießen von z. B. Autozündspulen sehr kritisch!) treten daher nicht auf.

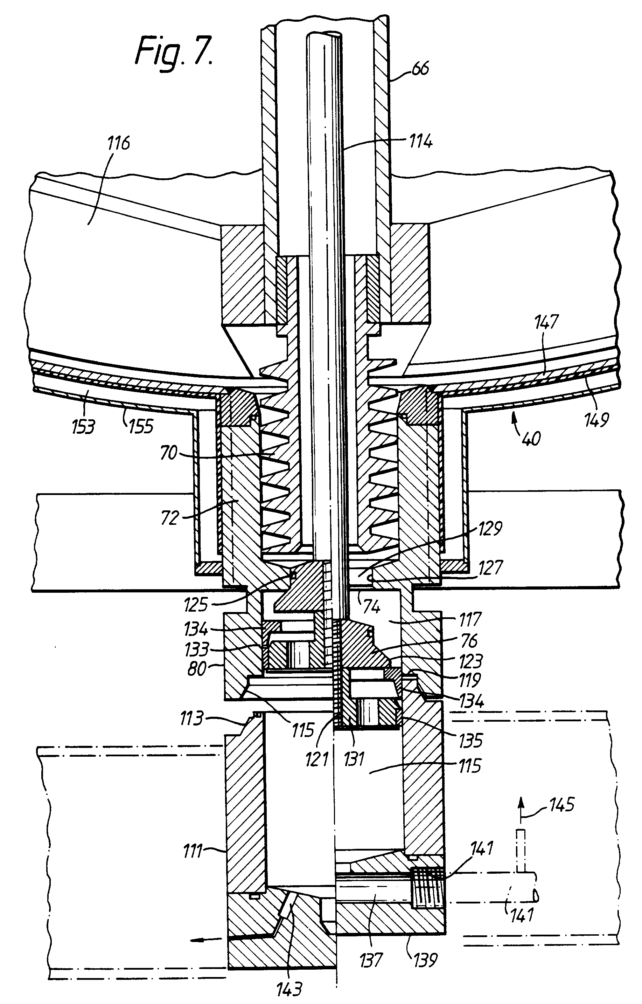

Außerdem trägt das untere Ende des Rohrs 66 eine Förderschneckeneinrichtung 70, die in einem Schneckengehäuse 72 gelagert ist, das gleichzeitig einen Ventilsitz 74 für einen Ventilkolben 76 bildet, der in einer Kolbenstange 114 montiert ist, die durch das Rohr 66 und die hohle Antriebswelle 52 bis in den Kupplungsbereich der Schnellkupplungseinrichtung 48 reicht, wo sie mit einer Antriebskolbenstange 134 verkuppelbar ist, die wiederum durch eine Kolbenantriebseinrichtung 78 auf und ab geschoben werden kann. Dadurch kann der Ventilkolben 76 zum einen in die auf der linken Hälfte der Fig. 3 dargestellte geschlossene Stellung gebracht werden, bei der Material aus dem Behälter 40 nicht durch die Behälteraustrittsöffnung 80 nach außen gelangen kann, sowie in eine geöffnete, nach unten geschobene Stellung, die in der rechten Hälfte der Figur 3 bzw. 7 dargestellt ist, bei der Material, ggf. unter zusätzlicher Förderung mittels der Förderschnecke 70, aus dem Behälterinnenraum durch die Ventilöffnung hindurch aus dem Behälteraustrittsöffnungsbereich 80 nach unten strömen kann.

Die Kuppeleinrichtung 48 weist außerdem eine zweite Kupplungsscheibe 82 auf, die in einem Getriebegehäuse 84 gelagert ist und dort beispielsweise mittels eines Elektromotors 86 gedreht werden kann.

Das Getriebegehäuse 84 wird von einem Ausleger 88 getragen, der an einer Säule 90 in Axialrichtung der Säule 90 auf und ab geschoben werden kann, so daß von den Scheiben 50 bzw. 82 ausgehende Mitnehmerstifte 92, 94 in entsprechende Bohrungen in den Scheiben 50 bzw. 82 eindringen und dadurch eine Drehkupplung bewirken können, wenn der Ausleger 88 entsprechend nach unten gefahren wird. Wenn umgekehrt der Ausleger 88 nach oben gefahren wird, treten die Stifte 92, 94 der Kupplungsscheiben 50, 82 aus den entsprechenden Bohrungen in den Kupplungsscheiben heraus und die Schnellkuppeleinrichtung 48 ist entkuppelt. Bei weiterem Anheben löst sich auch die Kolbenstange 114 von der Kolbenantriebsstange 134, und zwar am Teilungspunkt 94, so daß die Antriebsstange 134 auch aus der hohlen Antriebswelle 52 freikommt. Damit ist die Schnellkupplungseinrichtung 48 völlig von der Mehrwegbehälteranordnung 40 getrennt und diese kann einschließlich dem Aufnahmegestell 42 aus der Aufnahme 44, beispielsweise mittels eines Gabelstablers 96, der mit seinen Gabeln 98 in den Zwischenraum 101 einfährt, aus dem Gestell 44 herausgehoben werden und zu einem anderen Ort transportiert werden, beispielsweise zu einem Lagerraum 103 für wiederzufüllende Mehrwegbehälter. Während dieses Transportes ist die Ventilstange 114 nach oben geschoben und das Ventil 76 liegt an der Ventildichtung 74 an, so daß Material dann nicht austreten kann. Das Nachobenschieben der Ventilstange 114 kann zwangsweise während des Abhebens des Auslegers 88 erfolgen, entweder durch dabei auftretende Zugkräfte, oder auch Zwangsweise durch eine Feder 105, die einerseits am unteren Ende innerhalb des Hohlrohrs 66 gehalten wird, siehe Bezugszahl 107, andererseits sich mit Federdruck an einen Stift 109 anlegt, der von der Stange 114 getragen wird, so daß der Federdruck der Feder 105 die Stange 114 stets nach oben zu drängen sucht. Erst wenn mit Einfahren der Kupplungseinrichtung 48 die Antriebsstange 134 in entsprechende Aufnahmeeinrichtungen an dem Verbindungspunkt 94 einfährt und dabei auch die Stange 114 nach unten drückt, ergibt sich die Möglichkeit, bei Antrieb des Kolbenantriebs 78 den Ventilkolben 76 aus seiner geschlossenen, links dargestellten Stellung gemäß Fig. 3 oder 7 in eine geöffnete, rechts dargestellte Stellung zu bewegen. Während des Transports ist jedoch der Ventilkolben 76 stets in seiner geschlossenen Stellung, was einen Sicherheitsfaktor darstellt. Zusätzlich kann natürlich noch eine Verschlußkappe oder ein Verschlußstopfen vorgesehen sein, der auf ein Außengewinde (hier nicht dargestellt) der zylindrischen Behälteraustrittsöffnung 80 oder entsprechend in ein Innengewinde dieser Öffnung aufgesetzt oder eingebracht werden kann.

An der Station 100, wo aus dem Wechselbehälter 40 Material entnommen werden soll, ist in der Aufnahme 44 noch eine Materialempfangseinrichtung 111 angeordnet, bestehend aus einem, von einer ersten, links dargestellten Stellung in eine zweite, rechts in Fig. 3 bzw. 7 dargestellte Stellung, nach oben verschiebbaren Aufnahmering, der mit seinem oberen Rand 113 in eine entsprechend geformte Nut oder Fläche 115 der Behälteraustrittsöffnung 80 einfahren kann, um so eine druckdichte Verbindung zu schaffen, wenn nach Einsetzen des Behälters 40 mit dem Gestell 42 in die Aufnahme 44 anschließend die Materialempfangseinrichtung 111 von der links dargestellten Stellung nach oben in die rechts in Fig. 3 bzw. 7 dargestellte Stellung geschoben wird. Wenn jetzt anschließend der Kolben 76 nach unten gefahren wird, dringt er teilweise auch in den entsprechend geformten Innenraum 115 ein, siehe insbesondere die vergrößerte Darstellung der Fig. 7. Behälteraustrittsöffnung 80 mit Innenraum 117 und Materialempfangseinrichtung 111 mit Innenraum 115 bilden somit einen Zylinderkolben für den Ventilkolben 76, wenn die beiden, siehe die rechte Seite der Fig. 7, aufeinander zugefahren sind. Zur Abdichtung können zusätzlich noch Dichtungsscheiben, in Form von Flachdichtungen oder O-Ringdichtungen 119 vorgesehen sein, wie in Fig. 7 zu erkennen. Die Fig. 7 läßt weitere Details erkennen: So trägt die Stange 114 an ihrem Ende einen Ansatz 121 reduzierten Durchmessers mit Außengewinde, auf dem zum einen der Ventilkopf 123 des Ventilkolbens 76 mittels einer entsprechenden Gewindedurchbruchbohrung aufgeschraubt ist, wobei noch eine Ringnut 125 zur Aufnahme einer O-Ringdichtung zu erkennen ist, die mit der zylindrischen Innenfläche 127 der Austrittsöffnung 129 des Schneckengehäuses 72 zusammenarbeitet und in hochgezogener Stellung des Kolbens 76 eine zusätzliche Abdichtung ergibt, desweiteren trägt der Ansatz 121 eine Mitnehmerplatte 131, derart, daß zwischen ihr und dem Ventilkopf 123 ein Manschettenkörper 134 mit gewissem axialen Spiel hin- und herbeweglich ist, wobei die linke Hälfte der Fig. 7 einen nach unten verschobenen Manschettenkörper 131 zeigt, der mit seiner unteren Lippe 133 an einer von der Mitnehmerplatte 131 in einer entsprechenden Außennut getragenen O-Ringdichtung 135 anliegt, in eine auf der rechten Seite der Fig. 7 dargestellte Stellung verschieblich ist, in der der Manschettenkörper 134 am Ventilkopf 123 anliegt.

Ventilkopf oder Dichtplatte 123, Manschettenkörper 134 und Mitnehmerplatte 131 bilden in Verbindung mit dem Innenraum 115, 117 und der Förderschnecke 70 in ihrem Schneckengehäuse 72 eine Dosiervorrichtung, wie sie in der deutschen Patentschrift 1778396 beschrieben wird, worauf hiermit verwiesen sei.

Mit dieser Anordnung gelingt eine genaue Dosierung auch von Kleinmengen von viskosem Material, das über eine Ausgangsleitung 137 abgegeben werden kann, die von einer Zylinderraumabschlußplatte 139 gebildet wird und die in eine Anschlußinnengewindeanordnung 141 mündet, an die ein entsprechender Rohr- oder Schlauchanschluß angeschraubt werden kann, um das Material von hier weiterzuleiten, beispielsweise über eine Leitung 24 zu einem Mischer 23 gemäß Fig. 1.

Alternativ kann aber auch eine Leitung 141 angeschlossen sein, siehe Fig. 7, die ihrerseits zu einem Zuflußpunkt für den Vorratsbehälter 12 führt, wie er in Fig. 1 zu erkennen ist. Hier hätte die Dosierung beispielsweise entweder keine Funktion oder die Funktion, den Vorratsbehälter 12 mit einer bestimmten Menge Material neu zu versorgen, wobei dann der Behälter 12 seine eigene Dosiereinrichtung hat.

Wenn sich der Behälterraum des Vorratsbehälters 40 leert, wird schließlich die Förderschnecke 70 kein Material mehr fördern und der Druck im Raum 115, 117 abfallen. Dies kann dadurch festgestellt werden, daß am unteren Ende der Gesamtanordnung gemäß Fig. 7, vorzugsweise in der Abschlußplatte 139, ein Drucksensor 143 vorgesehen wird, der ein erstes Signal abgibt, solange sich Material in dem Raum 114, 117 befindet, das unter Förderschneckendruck 70 oder statischem Druck einer im Behälter 40 befindlichen Flüssigkeitsmenge befindet, und ein zweites Signal, das ein Warnsignal sein kann, wenn dieser Druck so weit absinkt, daß anzunehmen ist, daß die Förderschnecke 70 kein Material mehr fördert, und der Raum 115, 117 leer ist. Das Bedienungspersonal wird dann darauf aufmerksam gemacht, daß der Behälter 40 geleert ist und ausgetauscht werden sollte. Zu diesem Zweck würde dann die Kolbenstange 114 hochgefahren werden, (geschieht z. B. automatisch bei Entkupplung, wie schon erläutert), woraufhin der Ventilkopf 123 nach oben fährt und mit seiner Dichtung 125 in die zylindrische Fläche 127 gelangt und dort eine dichte Abdichtung bewirkt. Nunmehr kann die aus den Teilen 111 und 139 bestehende Anordnung von der rechts dargestellten Stellung in Fig. 7 in die links dargestellte Stellung nach unten gefahren werden, so daß die links dargestellte Position sowohl von den Bauteilen 111, 139 sich ergibt, wie auch die bereits erreichte Stellung des Kolbens 76. In dieser Stellung kann die Anordnung 40 ohne Anheben seitlich weggefahren werden, ohne daß hier eine Behinderung auftritt.

Fährt man das Bauteil 111 nicht nach unten, kann stattdessen auch die Gesamtanordnung 40 angehoben werden.

Die in dem Bereich 115, 117 verbleibende Materialmenge ist sehr klein, verglichen mit dem Inhalt des Behälters 40. Wenn jetzt ein neuer Behälter, der gefüllt ist, eingefahren wird, können diese Restmengen verbleiben, jedoch muß dafür Sorge getragen werden, daß jetzt eingedrungene Luft in geeigneter Weise beseitigt wird. Zu diesem Zweck könnte eine Nebenleitung in Form einer Entlüftungsleitung 145 vorgesehen werden, in die nach dem Aufsetzen eines neuen Vorratsbehälters zunächst Material abgegeben wird, das noch mit Luft vermischt ist, bis durch entsprechende Meßeinrichtungen sichergestellt wird, daß alle während des Wechselvorgangs eingedrungene Luft und Luftfeuchtigkeit und ähnliches mit nachgeschobenem Material abgetrennt wurde, so daß wieder die Ursprungsverhältnisse des völlig gefüllten Raumes 115, 117 erreicht ist. Wegen des Vakuumanschlusses entweichen diese geringen Luft- und Feuchtigkeitsmengen aber auch ohnehin durch die Masse nach oben und werden dann von der Vakuumeinrichtung abgesaugt.

Um das in dem Behälter 40 befindliche Material auf eine bestimmte Temperatur zu bringen bzw. dort zu halten, kann der vorzugsweise aus Stahl geschweißte Behältermantel 147 mit einer elektrisch beheizbaren Heizmatte 149 ausgestattet sein, die beispielsweise von einem Heizenergieversorgungsgerät 151 versorgt wird. Stattdessen oder auch zusätzlich kann ein den Behälter 40 umkleidender Raum 153, gebildet durch eine Außenblechhülle 155, mit einer Temperierflüssigkeit, wie Wasser, versorgt werden, wie es bereits anhand der Fig. 1 (siehe Bezugszahl 18) erläutert wurde.

Die bisher beschriebene Station, in Fig. 2 mit Bezugszahl 100 versehen, dient zur, vorzugsweise dosierten, Abgabe von Material an eine Verarbeitungsstation. Um einen leeren Behälter wieder zu füllen, wird dieser z. B. von einer Leerbehältervorratsstation 103, siehe Fig. 2, an eine Füllstation 157 gebracht, die an sich ähnlich aufgebaut sein kann, wie die Verarbeitungsstation 100, wobei jedoch der untere, zur Abnahme von Material dienende Bereich, bestehend beispielsweise aus den Bauteilen 111, 139 wegfallen kann.

Die übrigen Einrichtungen können vorhanden sein, beispielsweise zu dem Zweck, Material aufzubereiten, das hier in dem Behälter 40 über z. B. eine Zulauföffnung 159 (Fig. 3) eingefüllt wurde (über die alternativ eine Vakuumpumpe angeschlossen werden kann, um den Behälter zu evakuieren) oder auch über einen weiteren Zulaufanschluß 161, der mit einem Rohr bis in den Bereich des unteren Rührwerks 116 reicht und daher so konzipiert ist, daß er Material direkt in die Rührwerkbewegung eingibt, oder noch weiter über ein Mannloch mit Sichtscheibe 163, oder schließlich durch Abnehmen des Deckels 62 von dem Topf 68 durch Lösen der Flanschringverschraubungen 165.

Nach ggf. erneutem Schließen des Behälters 40 wird dann die Aufbereitung, wie z. B. der Entgasungs-, Temperier- und Mischvorgang eingeleitet, bei dem sich das Rührwerk 116 unter dem Antrieb der Antriebseinrichtung 46 dreht, wobei gleichzeitig Material durch eine hier nicht näher dargestellte Fördereinrichtung von dem unteren Bereich des Behälters 40 zum oberen Bereich geführt wird, um dann auf das Ablaufblech 130 gegeben zu werden. Ein solcher Misch- und Entgasungsbetrieb ist beispielsweise in der Gebrauchsmusterschrift 761332 beschrieben, siehe z. B. den Anspruch 6.

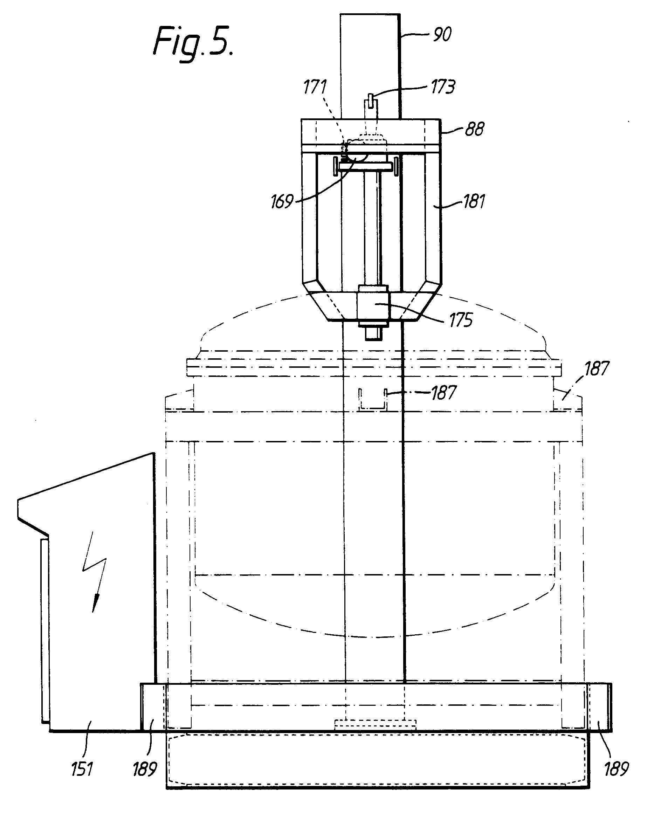

Die Anschlüsse für die Herstellung eines Vakuums innerhalb des Behälters sowie die Zufuhr von Wärme zur Temperierung des innerhalb des Behälters befindlichen Materials können ebenfalls Schnellkupplungseinrichtungen sein, die hier nicht näher dargestellt sind. Ebenso können Schnellkupplungseinrichtungen zur Verbindung der Anordnung mit Regel- und Steuereinrichtungen für mechanische, elektrische, Vakuum- und Wärme/Kälteenergie mit am oder innerhalb des Vorratsbehälters angeordneten Sensoren für Temperatur, Druck, Viskosität, örtliche Lage von Bauteilen und dgl. vorgesehen sein, wobei eine Steuerwarte 151 (Fig. 5) mit Anzeigeeinrichtungen und Regelknöpfe zu diesem Zweck vorgesehen sein können. Von hier aus kann auch das Auf- und Abfahren der Bühne oder des Auslegers 88 gesteuert werden, siehe beispielsweise die Fig. 5, eine Ansicht von rechts auf die Anordnung gemäß Fig. 4. Die Steuerung des Auf- und Abfahrens kann mittels eines Motors 167 mit Ritzel 169 erfolgen, das in einer Zahnstange 171 kämmt, die in geeigneter Weise an der Säule 90 befestigt ist. Dabei laufen Führungsräder 173, 175 oder entsprechende Führungsschlitten in zugeordneten Schienen 177, 179, die von der Säule 90 getragen werden. Anstatt der Zahnstange kann auch eine Schnecke 171 vorgesehen sein.

Der Ausleger 88 kann versteift sein, beispielsweise durch Querstreben 181, 183.

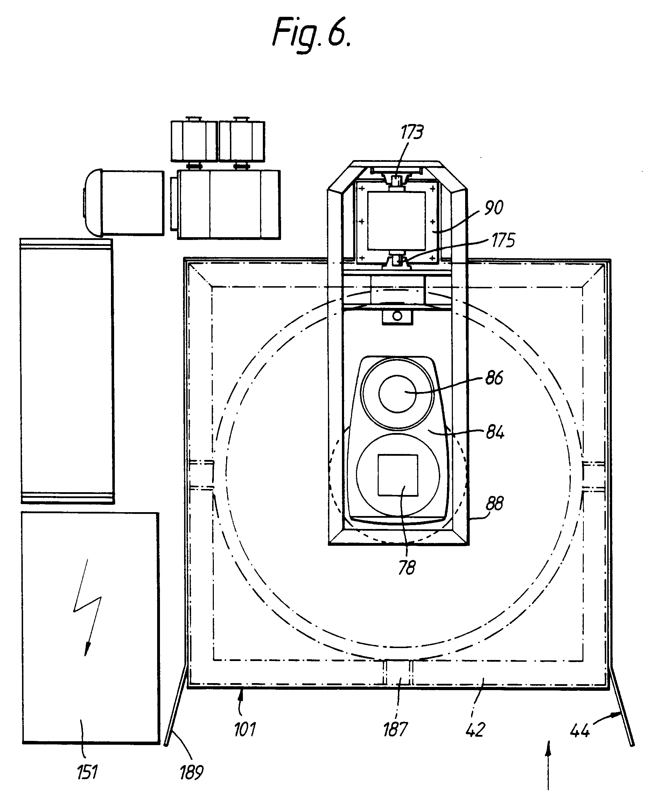

Der Vorratsbehälter 40 ist, wie aus den Figuren erkennbar, in einen Stapelrahmen oder Aufnahmegestell 42 eingebracht, der hier aus Rechteckprofilstücken zusammengeschweißt ist, siehe die Bezugszahl 185. Von oben hat dieses Gestell eine quadratische Gestalt, siehe Fig. 6, wobei die runde Behälterwand mit Hilfe von vier Laschen 187 der Behälter auf dem Rahmen 42 abgestützt wird. Dieses Gestell 42 ist in die Aufnahme von einer Seite einschiebbar, gemäß der Fig. 6 aus einer Richtung, die durch den Pfeil 101 gekennzeichnet ist. Um das Einfahren zu erleichtern, sind seitliche Haltebleche 189, siehe auch die Fig. 4, vorgesehen, die sich an der Einfahröffnung trichterförmig erweitern, siehe Fig. 6. Der Rahmen ist offensichtlich so ausgestaltet, daß er den Behälter sicher vor äußeren Beschädigungen beim Handhaben schützt. Der rechteckige bzw. quadratische Rahmen erlaubt auch ein bequemes Stapeln, ggf. unter Benutzung eines Zwischenrahmens 191, oder auch mit Hilfe eines Aufnahmebordes 193, in dem eine größere Anzahl derartiger Mehrwegbehälter 40, 140 untergebracht werden können. Dabei ist der Unterschied zwischen dem Behälter 40, 140 nur der, daß sie unterschiedliches Material aufgenommen haben.

Von der Füllstation 157 kann der Wechselbehälter 40 mit Hilfe des bereits erläuterten Gabelstablers 96 zu Lagereinrichtungen 193, 103 gefahren werden, oder aber zu einer Bahnstation, um die Behälter 40 mittels Eisenbahntransport oder ggf. auch mittels Lastwagentransport von einem Ort zu einem entfernt liegenden anderen Ort zu bringen, beispielsweise von einer chemischen Fabrik, die die Ausgangsstoffe herstellt, zu einer Anwendungsfirma, die das Material verarbeitet, beispielsweise elektronische Bauteile vergießt.

Diese Transportmittel sind in Fig. 2 mit der Bezugszahl 193 versehen. Die hier beschriebenen Wechselbehälter können unterschiedliche Materialmengen aufnehmen, wobei z. B. als kleinste Größe ein Behälter mit einem Nutzinhalt von 400 l vorgesehen sein könnte. Der Behälter hätte dann etwa einen Durchmesser von 90 cm, während die Rechteckseiten des den Behälter aufnehmenden Gestells eine Kantenlänge von 120 cm aufwiesen. Das Gesamtgestell einschließlich der dazugehörenden Kupplungseinrichtung mit der Kupplungsscheibe 50 hätte dann eine Höhe von beispielsweise 180 cm. Verdoppelt man den Inhalt des Behälters, steigen diese Maße nur geringfügig an, beispielsweise auf 120 cm, 150 cm und 200 cm. Eine Verdreifachung oder Vervierfachung des kleinsten Inhalts führten jeweils zu einer weiteren linearen Erhöhung von ca. jeweils 20 cm.

Es ist somit zu erkennen, daß mit verhältnismäßig geringem Raumbedarf sehr große Mengen von Material aufgenommen, transportiert, gelagert und abgegeben werden können.

Um sicherzustellen, daß beim Transport die Kolbenstange 114 sicher in der angehobenen Stellung bleibt und dadurch das Ventil am unteren Ende des Behälters geschlossen ist, kann am oberen Ende der Stange 114 eine axiale Bohrung in die Stangenstirn hineingeführt sein, in die eine Kopfmutter eingeführt wird, die sich mit ihrem Kopf auf das Stirnende der hohlen Antriebswelle 52 legt und dadurch die Stange 114 in der angehobenen Stellung sicher festhält.

Im Gegensatz zu dem bisher benutzten System mit Wegwerfcontainern kann der Wechselcontainer auch bereits unter Vakuum gefüllt werden, so daß das Material vorevakuiert ist, was die Aufbereitungszeit später beim Kunden verringert, außerdem wird dann sichegerstellt, daß während des Umfüllens keine Luft und keine Feuchtigkeit in das Material eindringt. Das verkürzt die Verarbeitungszeit, wobei eine weitere Verkürzung dadurch eintritt, daß der Kunde den Behälter mit sehr einfachen Maßnahmen in die Aufbereitungsstation eindocken kann, woraufhin dann die Fertigaufbereitung stattfindet, oder die Gesamtaufbereitung, jenachdem, ob das Material bereits vorverarbeitet war.

Die Schaufeln des Rührwerks 116 verhindern dabei sowohl während der Aufbereitung wie auch später bei der Verarbeitung eine Sedimentation. Während des Transports sedimentierter Füllstoff wird wieder aufgerührt. Im übrigen kann durch während des Verarbeitungs- und ggf. auch Aufbereitungsschrittes eine Eigenumwälzung des Materials stattfindet, wodurch über die Ablaufbleche eine schnelle Entgasung und gute Neumischung erfolgt. Insgesamt wird damit ein geschlossenes System geschaffen, mit dem praktisch alle Harzsysteme verarbeitbar wären, selbst die, die gegenüber Umwelteinflüsse sehr empfindlich sind bzw. an die Umwelt sehr schädliche Gase abgeben können.

Direkt aus einer Aufbereitungsstation mit seinen sehr großen Inhalt aufweisenden Vorratsbehältern können mehrere Gruppen von Dosiermischern versorgt werden, wie sie beispielsweise in Fig. 1 dargestellt sind. Nach dem Leerwerden der Wechselbehälter werden sie aus der Arbeitsstation ausgedockt und zum Hersteller des Ausgangsmaterials zurückgebracht, wo sie nach dem Eindocken erneut gefüllt werden.

Durch die beschriebenen Füllstandssonden wird der Nachschub aus den Wechselcontainern geregelt. Diese Regelung kann derart erfolgen, daß für eine normale Arbeitsschicht von 8 Stunden etwa 100 % der Nennfüllmenge (z. B. 100 l) verbraucht wird. Das tatsächliche Behältervolumen ist größer (beträgt z. B. 130 l), um eine Aufschäumzone während des Entgasungsprozesses zur Verfügung zu haben. Dadurch wird eine Auffüllung auf z. B. 125 % möglich. Bei Absinken auf 100 % kann dann jeweils wieder 25 % nachgeschoben werden. Nur beim Aufbereiten würde die Füllmenge dann unter 100 % sinken. Der verbleibende Rest von 25 % gibt dann ausreichend Zeit, um einen neuen Behälter einzudocken.

Der Vorteil der mit Mischeinrichtung, Entgasungseinrichtung, Wärmeeinrichtung und Dosiereinrichtung versehenen Wechselcontainer ist der, daß die bisher stets notwendig gewesene Vormischergruppe, beispielsweise bestehend aus den Einheiten 11 und 12 bzw. 111 und 112 in Fig. 2, eingespart werden kann, so daß direkt von den beiden Wechselcontainern 40, 140 Material in die Mischer 23, 23a eingegeben werden kann, von wo sie dann zum Vergießen gelangen.

Die in den Figuren dargestellte Station kann zum einen eine Aufbereitungsstation zur Aufnahme von Mehrwegcontainern sein, wo die Harze lediglich aufbereitet werden. Sie kann aber auch als Versorgungsstation für Gieß- und Vakuumgießharzanlagen mit aufbereiteten Gießharzkomponenten genutzt werden. Zu diesem Zweck besteht die Station, wie bereits beschrieben, im wesentlichen aus einem Bodengestell, mit Führungssäule und Hubwerk zur Aufnahme von Rührwerk- und Förderpumpenantrieben.

Eine Maschinenkonsole dient zur Aufnahme der zur Harzaufbereitung notwendigen Aggregate, wie Vakuumpumpe mit Regeleinheit, Temperiergeräte mit entsprechenden Regeleinheiten, Schalt- und Steuerschrank für Pneumatik und Elektrik.

Die Arbeitsweise ist in der Form, daß die gefüllten Container mit Hilfe von Gabelstaplern in die Station eingesetzt werden. Die exakte Positionierung erfolgt über Einfuhrnocken.

Durch Absenken des Hubwerkes und entsprechende Verkupplung wird die Verbindung der Antriebe für Behälterrührwerk sowie Förderpumpe hergestellt.

Über Schnellkupplungen werden Vakuumpumpe, Heizaggregate sowie die entsprechenden Regeleinheiten angeschlossen. Danach wird der automatische Aufbereitungsprozeß eingeleitet.

Der Ablaufprozeß beinhaltet automatisches Evakuieren auf eingestellten Druck, auf Wunsch Evakuieren über Druckstufen zur Verhinderung von starkem Aufschäumen, automatisches Aufheizen bzw. Nachheizen der Container, automatisches Einschalten des Rührwerks nach entsprechender Zeitvorgabe, automatischer Umpumpbetrieb über Versorgungs bzw. Ringleitungen zur Harzentnahmestation, um eine Sedimentation/Ablagerung in den Rohrleitungen zu verhindern, was auch als Hochleistungsentgasung benutzt werden kann, sowie automatische Freigabe zur Versorgung der Gießharzstationen nach Ablauf vorgegebener Aufbereitungszeit.

Der Hubantrieb erfolgt vorzugsweise über einen Spindelmotor, während der Rührwerksantrieb einen stufenloser Antrieb von beispielsweise 20 bis 60 Umdrehungen pro Minute darstellt. Als Heizeinrichtungen sind wahlweise Wärmetauscher oder Temperiergeräte sowie entsprechende Sicherheits- und Regeleinrichtungen vorgesehen, mit einem Temperaturbereich zwischen Raumtemperatur und beispielsweise 130°C. Die vorzugsweisen Containergrößen erfordern Leistungen zwischen 10 und 20 kW.

Als Vakuumpumpe ist eine einstufige Drehschieberpumpe mit entsprechenden Sicherheits- und Regeleinrichtungen denkbar, mit einem Saugvermögen von beispielsweise 50 bis 100 cbm pro Stunde.

Vorzugsweise besteht der Mehrwegcontainer im wesentlichen aus einem Ganzstahlrundbehälter mit entsprechendem Rahmengestell. Er eignet sich daher für den Transport von gefüllten, zu Sedimentation neigenden wie auch abrasiven Harzsystemen. Der Container kann vom Harzlieferanten, aufgrund vakuumfester Ausführung auch unter Vakuumbetrieb, aufgefüllt und anschließend zur Spedition gegeben werden. Beim Endverbraucher erfolgt dann erneut eine Eindockung in die Aufbereitungs- und Pumpstation, wie sie eingangs beschrieben wurde. Durch den Einsatz dieser Container entfallen notwendige Einrichtungen wie Aufwärm- und Homogenisierungseinrichtungen, Auffangbehälter sowie entsprechende Maßnahmen zur Gebindeentsorgung.

Die Einrichtungen für Arbeitshygiene können ebenfalls erheblich verringert werden.

Der Container beinhaltet ein integriertes, der Bodenform angepaßtes Schaufelrührwerk mit entsprechenden Rührwerkbrechern. Dadurch wird nach dem Eindocken in die Arbeitsstation ein Aufrühren und Homogenisieren von entstandener Sedimentation ermöglicht.
Vorhanden ist auch ein Schnellkupplungssystem für Rührwerkund Förderpumpenantrieb, desweiteren ein innenliegendes Förderpumpensystem, wodurch Leckagen und Abdichtprobleme bei Vakuumbetrieb verringert werden, eine innenliegende Dünnschichtentgasung zur schnelleren Entgasung des Harzsystems, wobei bei Bedarf auch eine außenliegende, beheizte Hochleistungsentgasung mit vom Rührwerk unabhängigem Antrieb und variabler Fördermengenregelung vorgesehen sein kann. Die Beheizung kann wahlweise mittels Doppelmantel und Wärmeträgeröl bzw. Wasser als Heizmedium oder elektrisch über an den Behälter angepaßte Heizmatten erfolgen. Es ist eine entsprechende Isolierung mit Ganzstahlverkleidung zweckmäßig.

Im Behälterauslauf ist durch eine Dosierschnecke ebenfalls eine Verhinderung der Sedimentation möglich.

Dadurch, daß z. B. ein verschraubter Deckel vorgesehen wird, ist der Behälter leicht zu reinigen. Am Behälterauslauf ist vorzugsweise eine Transportschutzkappe vorgesehen. Der allseitige Aufnahmerahmen dient sowohl als Behälterschutz beim Transport, wie auch als Stapelrahmen und ist so ausgeführt, daß er als Transporteinrichtung für Gabelstapler nutzbar ist.

Zweckmäßigerweise ist der Einfüllstutzen konvertierbar für die jeweilige Anschlußgröße des Harzlieferanten. Die Anschlüsse erfolgen über Schnellkupplungen, wobei der Vakuumanschluß mit einer Vakuumregelung mit Absperrhahn versehen sein kann. Die Heizungsanschlüsse können elektrisch über Steckverbindungen erfolgen, oder bei Ausführung mit Thermalöl über tropffreie Schnellkupplungen. Entsprechende Schnellkupplungen sind auch für Rührwerk- und Förderpumpenantrieb vorgesehen. Der Anschluß zur Masseförderung befindet sich am Boden des Behälters, wodurch dieser Behälter optimal geleert werden kann. Es kann auch ein Anschluß zur Masserückführung für den Umpumpbetrieb am Deckel oberhalb des Dünnschichtentgasungsschirmes angeordnet werden.

### GEWERBLICHE AUSWERTBARKEIT

Die Vorrichtung und das Verfahren sind z. B. in der Elektrotechnik gewerblich auswertbar.

## Patentansprüche

1. Verfahren zur Aufbereitung, insbesondere Entgasung, Entfeuchtung und Homogenisierung von Gießharz in einer Gießanlage, welches Gießharz aus mehreren Komponenten, wie Harz und Härter mit sedimentierenden Füllstoffen besteht, wobei die Gießanlage mehrere, ein Rührwerk enthaltende und mit abnehmbarem Deckel versehene oder eine Zufuhröffnung aufweisende, vorzugsweise evakuierbare Vorratsbehälter (11, 12; 40, 140) für Gießharz oder die Gießharzkomponenten, den Vorratsbehältern Zugeordnete, an ihren unteren Austrittsenden angeordnete Dosierpumpen, deren Dosierkolben ein Ventil bilden, sowie Antriebseinrichtungen für die Dosierkolben der Dosierpumpen sowie Antriebseinrichtungen für das Rührwerk aufweist, welche Antriebseinrichtungen an einer Station (zweite Station, Verarbeitungsstation) mit dem Rührwerk verbindbar sind, dadurch gekennzeichnet, daß an einer Station (ersten Station, Füll-Station) der Vorratsbehälter, einschließlich geschlossenem Ventil, bei abgenommenem Deckel oder über die Zufuhröffnung mit Gießharz oder Gießharzkomponenten gefüllt, dann bei geschlossenem Deckel bzw. geschlossener Zufuhröffnung der Behälter (ggf. nach Herstellung und/oder Aufrechterhaltung eines Vakuums), wahlweise nach längerem Transport und/oder längerer Lagerung, an einer Station (zweiten Station, Verarbeitungsstation) mit den Antriebseinrichtungen verbunden und das Gießharz oder die Gießharzkomponenten verarbeitet werden.

2. Verfahren nach Anspruch 1, dadurch gekennzeichnet, daß an der zweiten oder Verarbeitungs-Station das Rührwerk mit Antriebseinrichtungen verbunden wird.

3. Verfahren nach Anspruch 1 oder 2, wobei der Vorratsbehälter einen Anschluß für eine Vakuumpumpe aufweist, dadurch gekennzeichnet, daß an der zweiten Station der Anschluß mit einer Vakuumpumpe verbunden wird.

4. Verfahren nach einem der Ansprüche 1 bis 3, wobei der Vorratsbehälter mit einer Heizeinrichtung versehen ist, dadurch gekennzeichnet, daß an der zweiten Station die Heizeinrichtung mit einer Heizenergiequelle verbunden wird.

5. Verfahren nach einem der Ansprüche 1 bis 4, dadurch gekennzeichnet, daß an der zweiten Station dem Vorratsbehälter ein (oder mehrere) kleinerer Vorratsbehälter zur weiteren Verarbeitung nachgeschaltet ist, der mittels beispielsweise in ihm vorhandener Dosierpumpe die Dosierung übernimmt.

6. Verfahren nach Anspruch 5, dadurch gekennzeichnet, daß zwischen den beiden Vorratsbehältern, über Versorgungs- oder Ringleitungen, ein Umpumpen des Vorrates stattfindet.

7. Verfahren nach Anspruch 6, dadurch gekennzeichnet, daß Unterdruck, Temperatur, Mischung, über Regeleinrichtungen gesteuert werden.

8. Verfahren nach Anspruch 7, dadurch gekennzeichnet, daß der Rührbetrieb über Zeitsteuerung betrieben wird.

9. Verfahren nach einem der Ansprüche 1 bis 8, dadurch gekennzeichnet, daß die Freigabe der Versorgung der Gießharzstationen nach vorbestimmten Aufbereitungszeiten und/oder Erreichen bestimmter Parameter des Vorratsmaterials, z. B. Viskosität, Temperatur, Unterdruck, Gasgehalt, erfolgt.

10. Vorrichtung zur Ausführung den Verfahrens gemäß Anspruch 1, bestehend aus
(I) einem vorzugsweise evakuierbaren Vorratsbehälter (11, 12; 40, 140) mit abnehmbarem Deckel oder Zugangsöffnung für Gießharz oder Gießharzkomponente und mit zugeordneter Dosierpumpe (13, 14, 76) und Rührwerk (66, 116),
(II) zwei Stationen, einer ersten Station (Füll-Station), an der der Vorratsbehälter (11, 12; 40, 140) gefüllt wird, und einer zweiten Station (Verarbeitungs-Station) (100), an der der Vorratsbehälter (11, 12; 40, 140) mit Antriebseinrichtungen verbindbar ist,
(III) je einem Aufnahmegestell (42, 44) an jeder Station, welches Aufnahmegestell (42, 44) mit dem Vorratsbehälter (40) verkuppelbare Antriebsvorrichtungen (86, 78) für die Dosierpumpe und für das Rührwerk (66, 116) aufweist.

11. Vorrichtung nach Anspruch 10, dadurch gekennzeichnet, daß das Aufnahmegestell (42, 44) Schnellkuppelvorrichtungen (48) zur Verbindung eines mechanischen Antriebs (86, 78) mit einem innerhalb des Vorratsbehälters (40) angeordneten Rührwerk (66, 116) aufweist.

12. Vorrichtung nach Anspruch 11, dadurch gekennzeichnet, daß das Aufnahmegestell (42, 44) Schnellkupplungseinrichtungen zur Verbindung einer Vakuumquelle und/oder eines mechanischen Antriebs mit einem innerhalb des Vorratsbehälters (40) angeordneten Vakuum- und/oder Entgasungseinrichtung (159, 130) aufweist.

13. Vorrichtung nach einem der Ansprüche 11 oder 12, dadurch gekennzeichnet, daß das Aufnahmegestell (42, 44) eine Schnellkupplungseinrichtung zur Verbindung einer Energiequelle für Wärme oder Kälte mit einer am oder innerhalb des Vorratsbehälters angeordneten Temperiereinrichtung (149; 153) aufweist.

14. Vorrichtung nach einem der Ansprüche 11 bis 13, dadurch gekennzeichnet, daß das Aufnahmegestell (42, 44) eine Schnellkupplungseinrichtung zur Verbindung von Regel- und Steuereinrichtungen für mechanische, elektrische, Wärme/Kälteenergie und für Vakuum mit an dem oder innerhalb des Vorratsbehälters (40) angeordnete Sensoren für Temperatur, Druck, Viskosität, örtliche Lage von Bauteilen aufweist.

15. Vorrichtung nach einem der Ansprüche 10 bis 14, dadurch gekennzeichnet, daß mehrere voneinander unabhängige Verarbeitungsstationen (100) vorgesehen sind.

16. Vorrichtung nach einem der Ansprüche 10 bis 15, dadurch gekennzeichnet, daß ein Aufnahmegestell für den Vorratsbehälter (40) an einer Füll- und/oder Aufbereitungsstation (157) vorgesehen ist, mit an den Vorratsbehälter (40) ankuppelbaren Einrichtungen zum Füllen und/oder Aufbereiten des Harzes oder der Harzkomponente.

17. Vorrichtung nach Anspruch 16, dadurch gekennzeichnet, daß das Aufnahmegestell eine Hubeinrichtung (44) für das Abheben eines Deckels (62) des Vorratsbehälters (40) umfaßt.

18. Vorrichtung nach Anspruch 17, dadurch gekennzeichnet, daß der Deckel Antriebseinrichtungen für Rührwerk und Förderpumpe trägt (78, 86).

19. Vorrichtung nach einem der Ansprüche 10 bis 18, dadurch gekennzeichnet, daß der Vorratsbehälter (40) aus einen kesselartigen, vorzugsweise zylindrischen Querschnitt aufweisenden Druckbehälter darstellt, der von einem vorzugsweise im Querschnitt quadratischen oder rechteckigen Transport- oder Stapelrahmen (42) umschlossen ist.

20. Vorrichtung nach Anspruch 19, dadurch gekennzeichnet, daß zur Stapelung ein Zwischenrahmen (191) vorgesehen ist.

21. Vorrichtung nach Anspruch 19 oder 20, dadurch gekennzeichnet, daß der Rahmen (42) mittels Gabelstapler (96) erfassbar ist.

22. Vorrichtung nach Anspruch 19, 20 oder 21, dadurch gekennzeichnet, daß der Vorratsbehälter (40) ein Mehrweggebinde aus Metall, wie Stahl ist, vorzugsweise mit Innenbeschichtung aus rostfreiem Metall oder aus Kunststoff.

23. Vorrichtung nach einem der Ansprüche 19 bis 22, dadurch gekennzeichnet, daß der Vorratsbehälter (40) ein der Bodenform des Behälters angepaßtes Schaufelrührwerk (116) umfaßt.

24. Vorrichtung nach einem der Ansprüche 18, 19 oder 20, dadurch gekennzeichnet, daß der Behälter (40) einen Doppelmantel (147) zur Aufnahme von Wärmeträgeröl oder Nasser als Heizmedium aufweist, oder eine an die Behälteraußenfläche angepaßte Heizmatte (149) zur elektrischen Beheizung.

25. Vorrichtung nach Anspruch 23 oder 24, dadurch gekennzeichnet, daß der Behälter eine thermische Isolierung aufweist, die mit einer Schutzverkleidung aus z. B. Stahlblech versehen ist.

26. Vorrichtung nach einem der Ansprüche 10 bis 25, dadurch gekennzeichnet, daß ein am Behälterboden vorgesehener Behälterauslauf (80) eine Ankuppeleinrichtung zum Ankuppeln einer Verarbeitungseinrichtung aufweist.

27. Vorrichtung nach Anspruch 26, dadurch gekennzeichnet, daß der Behälterauslauf (80) eine Schutzkappe oder einen Schutzstopfen als Transportschutz und Auslaufsicherung aufweist.

28. Vorrichtung nach einem der Ansprüche 10 bis 27, dadurch gekennzeichnet, daß der Transportrahmen mit Vorratsbehältern (40) unterschiedlichen Inhalts, aber gleicher Höhe verwendbar ist.

29. Vorrichtung nach einem der Ansprüche 10 bis 28, dadurch gekennzeichnet, daß das Aufnahmegestell (42) für den Vorratsbehälter (40) in einer Aufnahme (44) einfahrbar ist, die an der Verarbeitungsstation eine mit der Austrittsöffnung (80) des Vorratsbehälters (40) verkuppelbare, mit dieser Austrittsöffnung (80) ein Vontilkolbengehäuse bildende Einrichtung darstellt, in die ein vom Vorratsbehälter (40) getragener Dosierkolben (76) zur Ausführung eines Dooierbetriebes oder zur Abdichtung des Behälters einfahrbar ist.

30. Vorrichtung nach Anspruch 29, dadurch gekennzeichnet, daß die Aufnahme einen Drucksensor zur Ermittlung des Restinhalts oder Leerstands des Vorratsbehälters (40) umfaßt.

## Claims

1. Method for the processing, in particular degasification, moisture removal and homogenisation, of cast resin in a casting installation, this casting resin being made from several components, such as resin and hardener with sedimented fillers, whereby the casting installation has several, preferably dischargeable, storage containers (11, 12; 40 140) for the casting resin or the cast resin components, incorporating a stirring system and having a removable cover or feed opening, metering pumps adjoining the storage containers, being arranged on the outlet ends on the underside thereof, whose metering pistons form a valve, as well as drive mechanisms for the metering pistons of the metering pumps and drive mechanisms for the stirring system, these drive mechanisms being capable of connection with the stirring system at a station (second station, processing station), characterised in that, the storage container, including the closed valve, can be filled with casting resin or cast resin components when the cover is removed or via the feed orifice at one station (first station, filling station), and then, after the cover or the feed orifice of the container has been closed (depending on the type or manufacture and/or whether a vacuum has to be maintained), can be transported and/or stored for a long period as required and, together with the drive mechanisms, connected to a station (second station, processing station) and the casting resin or cast resin components processed.

2. Method as claimed in claim 1, characterised in that at the second or processing station, the stirring system is connected to drive mechanisms.

3. Method as claimed in claim 1 or 2, whereby the storage container has a connector for a vacuum pump, characterised in that the connector is linked to a vacuum pump at the second station.

4. Method as claimed in one of claims 1 to 3, whereby the storage container is provided with a heating system, characterised in that the heating system is connected to a thermal energy source at the second station.

5. Method as claimed in one of claims 1 to 4, characterised in that at the second station a (or several) smaller storage container(s) is (are) connected downstream of the storage container for further processing and takes over the metering function by means of a metering pump provided therein, for example.

6. Method as claimed in claim 5, characterised in that the contents are pumped between the two storage containers by means of supply or circuit pipes.

7. Method as claimed in claim 6, characterised in that under-pressure, temperature and mixing are controlled by means of a control mechanism.

8. Method as claimed in claim 7, characterised in that the stirring process is driven on the basis of a timing control.

9. Method as claimed in one of claims 1 to 8, characterised in that the supply of casting resin at the station is released on the basis of predetermined processing times and/or fulfilment of specific parameters of the base material, such as viscosity, temperature, vacuum pressure, gas content.

10. Device for implementing the method as claimed in claim 1, comprising
(I) a preferably dischargeable storage container (11, 12; 40, 140) with removable cover or access orifice for casting resin or cast resin components and with an adjoining metering (13, 14, 76) and stirring system (66, 116),
(II) two stations, a first station (filling station) at which the storage container (11, 12; 40, 140) is filled and a second station (processing station) (100), at which the storage container (11, 12; 40, 140) can be connected to drive mechanisms,
(III) a respective support member (42, 44) at each station, this support member (42, 44) having drive mechanisms (86, 78) for the metering pump and the stirring system (66, 116) that can be connected to the storage container (40).

11. Device as claimed in claim 10, characterised in that the support member (42, 44) has quick coupling devices (48) for connecting a mechanical drive (86, 78) to a stirring system (66, 116) arranged inside the storage container (40).

12. Device as claimed in claim 11, characterised in that the support member (42, 44) has quick coupling devices for connecting a vacuum source and/or mechanical drive to a vacuum and/or degasification device (159, 130) arranged inside the storage container (40).

13. Device as claimed in one of claims 11 or 12, characterised in that the support member (42, 44) has a quick coupling device for connecting a heating or cooling energy source to a tempering device (149; 153) arranged on or in the storage container.

14. Device as claimed in one of claims 11 to 13, characterised in that the support member (42, 44) has a quick coupling device for connecting regulating and control mechanisms for mechanical or electrical heating/cooling energy and for the vacuum system to temperature, pressure and viscosity sensors and position sensors for the components, these being arranged on or in the storage container (40).

15. Device as claimed in one of claims 10 to 14, characterised in that several processing stations (100) are provided, each being independent from the others.

16. Device as claimed in one of claims 10 to 15, characterised in that a support member is provided for the storage container (40) at a filling and/or processing station (157), having filling and/or processing devices for the resin or resin components that can be coupled with the storage container (40).

17. Device as claimed in claim 16, characterised in that the support member has a lifting device (44) for removing a cover (62) from the storage container (40).

18. Device as claimed in claim 17, characterised in that the cover provides a support for drive mechanisms for the stirring system and pumping system (78, 86).

19. Device as claimed in one of claims 10 to 18, characterised in that the storage container (40) is a boiler-type pressure tank, preferably of cylindrical cross section, which is surrounded by a transportation or storage frame (42) preferably of square or rectangular cross section.

20. Device as claimed in claim 19, characterised in that an intermediate frame (191) is provided for the purposes of storage.

21. Device as claimed in claim 19 or 20, characterised in that the frame (42) can be gripped by a fork-lift truck (96).

22. Device as claimed in claim 19, 20 or 21, characterised in that the storage container (40) is a multi-directional wound container of metal, such as steel, preferably with an inner coating of rustproof or synthetic material.

23. Device as claimed in one of claims 19 to 22, characterised in that the storage container (40) incorporates a paddle stirring system (116) designed to match the shape of the container floor.

24. Device as claimed in one of claims 18, 19 or 20, characterised in that the container (40) has a double skin (147) to accommodate heat-conducting oil or water as a heating medium, or a heating mat (149) fitted onto the exterior surface of the container for the purposes of electrical heating.

25. Device as claimed in claim 23 or 24, characterised in that the container has thermal insulation, which is provided with a protective cladding made from sheet steel for example.

26. Device as claimed in one of claims 10 to 25, characterised in that a container outlet (80) provided in the container floor has a coupling device for connecting to a processing device.

27. Device as claimed in claim 26, characterised in that the container outlet (80) has a protective cap or protective plug to provide protection during transportation and prevent leakages.

28. Device as claimed in one of claims 10 to 27, characterised in that the transportation frame can be used with storage containers (40) carrying contents of different types but of the same height.

29. Device as claimed in one of claims 10 to 28, characterised in that the support member (42) for the storage container (40) can be inserted in a housing (44), which constitutes a device that can be coupled with the outlet orifice (80) of the storage container (40) at the processing station and which, together with this outlet orifice (80), forms a valve piston housing, into which a metering piston (76) supported by the storage container (40) can be inserted in order to carry out a metering operation or seal off the container.

30. Device as claimed in claim 29, characterised in that the housing incorporates a pressure sensor for indicating the remaining content or empty status of the storage container (40).

## Revendications

1. Procédé pour la préparation, en particulier pour le dégazage, la déshydratation et l'homogénéisation, de résine coulée dans une installation de coulée, la résine coulée étant constituée par plusieurs composants, tels que de la résine et un durcisseur avec des charges sédimentées, l'installation de coulée présentant plusieurs réservoirs (11, 12; 40, 140) pour la résine coulée ou les composants de résine coulée, dans lesquels on peut de préférence faire le vide, présentant un agitateur et équipés d'un couvercle amovible ou d'une ouverture d'alimentation, les réservoirs comportant des pompes de dosage en leur extrémité d'évacuation inférieure dont les pistons forment une soupape ainsi que des dispositifs d'entraînement pour les pistons de dosage des pompes de dosage et des dispositifs d'entraînement pour l'agitateur, les dispositifs d'entraînement d'un poste (deuxième poste, poste de mise en oeuvre) pouvant être reliés à l'agitateur, caractérisé en ce qu'en un poste (premier poste, poste de remplissage), on remplit le réservoir, y compris la soupape fermée, en enlevant le couvercle ou via l'ouverture d'alimentation, avec de la résine coulée ou les composants de la résine coulée, puis en ce qu'on relie, lorsque le couvercle ou l'ouverture d'alimentation du réservoir est fermé (le cas échéant après avoir réalisé ou en maintenant le vide), après un transport et/ou un stockage prolongé, les dispositifs d'entraînement à un poste (le deuxième poste, poste de mise en oeuvre) et en ce qu'on met en oeuvre la résine coulée ou les composants de la résine coulée.

2. Procédé selon la revendication 1, caractérisé en ce que l'agitateur est relié aux dispositifs d'entraînement au deuxième poste ou poste de mise en oeuvre.

3. Procédé selon la revendication 1 ou 2, le réservoir présentant un raccord pour une pompe à vide, caractérisé en ce qu'au deuxième poste, le raccord est relié à une pompe à vide.

4. Procédé selon une quelconque des revendications 1 à 3, le réservoir étant pourvu d'un dispositif de chauffage, caractérisé en ce qu'au deuxième poste, le dispositif de chauffage est relié à une source d'énergie thermique.

5. Procédé selon une quelconque des revendications 1 à 4, caractérisé en ce qu'au deuxième poste, on place un (ou plusieurs) réservoir plus petit derrière le réservoir pour un traitement ultérieur, qui reprend le dosage à l'aide de pompes de dosage qu'il contient.

6. Procédé selon la revendication 5, caractérisé en ce qu'on réalise une circulation par pompage entre les deux réservoirs, via des conduites de distribution ou annulaires.

7. Procédé selon la revendication 6, caractérisé en ce qu'on commande la dépression, la température, le mélange via des dispositifs de régulation.

8. Procédé selon la revendication 7, caractérisé en ce que l'agitateur est commandé via une commande de synchronisation.

9. Procédé selon une quelconque des revendications 1 à 8, caractérisé en ce que l'alimentation des postes de résine coulée est démarrée après des temps de préparation définis au préalable et/ou après avoir atteint certains paramètres du matériau stocké, par exemple la viscosité, la température, la dépression, la teneur en gaz.

10. Dispositif pour la réalisation du procédé selon la revendication 1, constitué par
(I) un réservoir (11, 12; 40, 140) pouvant de préférence être vidé, présentant un couvercle amovible ou une ouverture d'alimentation pour de la résine coulée ou des composants de résine coulée ainsi que des pompes de dosage (13, 14, 76) et un agitateur (66, 116),
(II) deux postes, un premier poste (poste de remplissage) où on remplit le réservoir (11, 12; 40, 140) et un deuxième poste (poste de mise en oeuvre) (100) auquel le réservoir (11, 12; 40, 140) peut être relié via des dispositifs d'entraînement,
(III) un bâti (42, 44) à chacun des postes présentant des dispositifs d'entraînement (86, 78) pouvant être reliés au réservoir (40) pour la pompe de dosage et pour l'agitateur (66, 116).

11. Dispositif selon la revendication 10, caractérisé en ce que le bâti (42, 44) présente des dispositifs de raccordement rapide (48) pour relier un entraînement mécanique (86, 78) à un agitateur (66, 116) disposé à l'intérieur du réservoir (40).

12. Dispositif selon la revendication 11, caractérisé en ce que le bâti (42, 44) présente des dispositifs de raccordement rapide pour relier une source de vide et/ou un entraînement mécanique à un dispositif de vide et/ou de dégazage (159, 130) disposé à l'intérieur du réservoir (40).

13. Dispositif selon une quelconque des revendications 11 ou 12, caractérisé en ce que le bâti (42, 44) présente un dispositif de raccordement rapide pour relier une source d'énergie thermique pour de la chaleur ou du froid à un dispositif de régulation thermique (149, 153) disposé sur ou à l'intérieur du réservoir.

14. Dispositif selon une quelconque des revendications 11 à 13, caractérisé en ce que bâti (42, 44) présente un dispositif de raccordement rapide pour relier des dispositifs de commande et de régulation pour l'énergie mécanique, électrique, chaude/froide et pour le vide à des capteurs pour la température, la pression, la viscosité, la disposition de pièces, etc. disposés à l'intérieur du réservoir (40).

15. Dispositif selon une quelconque des revendications 10 à 14, caractérisé en ce qu'on a prévu plusieurs postes de préparation (100) indépendants les uns des autres.

16. Dispositif selon une quelconque des revendications 10 à 15, caractérisé en ce qu'un bâti pour le réservoir (40) est prévu à un poste de remplissage et/ou de préparation (157), présentant des dispositifs pouvant être reliés au réservoir (40) pour le remplissage et/ou la préparation de la résine ou des composants de la résine.

17. Dispositif selon la revendication 16, caractérisé en ce que le bâti présente un dispositif de levage (44) pour soulever un couvercle (62) du réservoir (40).

18. Dispositif selon la revendication 17, caractérisé en ce que le couvercle présente des dispositifs d'entraînement pour l'agitateur et la pompe de transport (78, 86).

19. Dispositif selon une quelconque des revendications 10 à 18, caractérisé en ce que le réservoir (40) est formé d'un réservoir sous pression en forme de chaudière présentant de préférence une section cylindrique, entouré d'un cadre de transport ou à empiler (42) carré ou rectangulaire.

20. Dispositif selon la revendication 19, caractérisé en ce qu'on a prévu un cadre intermédiaire (191) pour l'empilage.

21. Dispositif selon la revendication 19 ou 20, caractérisé en ce qu'on peut saisir le cadre (42) à l'aide d'une empileuse à fourche (96).

22. Dispositif selon la revendication 19, 20 ou 21, caractérisé en ce que le réservoir (40) est un fût à plusieurs prises en métal, tel que de l'acier, comportant de préférence un revêtement intérieur en métal inoxydable ou en matière synthétique.

23. Dispositif selon une quelconque des revendications 19 à 22, caractérisé en ce que le réservoir (40) entoure un agitateur à soc (116) dont la forme est adaptée à la forme du fond du réservoir.

24. Dispositif selon une quelconque des revendications 18, 19 ou 20, caractérisé en ce que le réservoir (40) présente une double enveloppe (147) destinée à recevoir de l'huile calorifique ou de l'eau comme agent calorifique ou un tapis chauffant (149) adapté à la surface extérieure du réservoir et pouvant être chauffé électriquement.

25. Dispositif selon la revendication 23 ou 24, caractérisé en ce que le réservoir présente une isolation thermique pourvue d'une revêtement de protection, par exemple en tôle d'acier.

26. Dispositif selon une quelconque des revendications 10 à 25, caractérisé en ce qu'une évacuation (80) du réservoir prévue au fond du réservoir présente un dispositif de raccordement pour raccorder un dispositif de mise en oeuvre.

27. Dispositif selon la revendication 26, caractérisé en ce que l'évacuation (80) du réservoir présente une cache de protection ou un bouchon de protection comme protection pour le transport et comme sécurité contre une fuite.

28. Dispositif selon une quelconque des revendications 10 à 27, caractérisé en ce que le cadre de transport peut être utilisé pour des réservoirs (40) de différents contenus, mais de même hauteur.

29. Dispositif selon une quelconque des revendications 10 à 28, caractérisé en ce que le bâti (42) pour le réservoir (40) peut être placé dans un évidement (44) qui peut être raccordé à l'ouverture d'évacuation (80) du réservoir (40) et qui forme ainsi avec cette ouverture (80) un bâti de piston à soupape dans lequel on peut introduire un piston de dosage (76) faisant partie du réservoir (40) pour réaliser un dosage ou pour fermer le réservoir.

30. Dispositif selon la revendication 29, caractérisé en ce que l'évidement contient un capteur de pression pour déterminer le contenu résiduel ou la vidange du réservoir (40).
